# EUROPÄISCHE PATENTANMELDUNG

(11) **EP 2 366 930 A1**
(43) Veröffentlichungstag der Anmeldung: **21.09.2011**
(21) Anmeldenummer: 11001895.9
(22) Anmeldetag: 08.03.2011
(51) Int. Cl.: F16L 19/08

(54) **Vorrichtung zum Verbinden mit einer Rohr- oder Schlauchleitung, insbesondere Klemmringverschraubung**

(30) Priorität: 17.03.2010 DE 102010012523
(71) Anmelder: Eisele Pneumatics GmbH & Co. KG, 71332 Waiblingen (DE)
(72) Erfinder: Harsch, Klaus, 71364 Winnenden (DE); Warner, Holger, 71336 Waiblingen (DE)
(74) Vertreter: Bartels & Partner

(57) **Zusammenfassung**

Die Erfindung betrifft eine Vorrichtung (1;101) zum Verbinden mit einer Rohr- oder Schlauchleitung (10), insbesondere Klemmringverschraubung, wobei die Vorrichtung (1;101) einen Grundkörper (2), ein Betätigungselement (4) und ein ringförmiges Klemmelement (6) aufweist, und wobei bei einer Relativbewegung des Betätigungselements (4) gegenüber dem Grundkörper (2) das Klemmelement (6) derart verformbar ist, dass die Rohr- oder Schlauchleitung (10) mit der Vorrichtung (1;101) verbindbar ist, wobei das Klemmelement (6) einen in axialer Richtung verlaufenden Schlitz (42) aufweist, und beim Betätigen des Betätigungselements (4) das Klemmelement (6) aufgrund des Schlitzes (42) in Umfangsrichtung federelastisch verformbar ist und dabei die lichte Weite des Klemmelements (6) federelastisch veränderbar ist.

## Beschreibung

Die Erfindung betrifft eine Vorrichtung zum Verbinden mit einer Rohr- oder Schlauchleitung, insbesondere eine Klemmringverschraubung.

Derartige Vorrichtungen können beispielsweise zum Verbinden einer Rohr- oder Schlauchleitung mit einem Anschlussstück eingesetzt werden, oder auch zum Klemmen einer Rohr- oder Schlauchleitung an einer Schottwand, durch welche die Rohr- oder Schlauchleitung hindurch geführt wird.

Aus dem Stand der Technik sind Quetsch- oder Klemmverschraubungen bekannt, die eine Überwurfmutter, einen Klemmkonus, einen Einlegering und eine Quetschdichtung, beispielsweise einen Gummiring, aufweisen, wobei durch das Aufdrehen der Überwurfmutter über den Klemmkonus der Dichtring zusammengedrückt wird. Bei dieser Art von Verbindung ist von Nachteil, dass sie nur für vergleichsweise geringe Drücke eingesetzt werden können. Für höhere Drücke kommen Schneidringverschraubungen zum Einsatz, die einen oder zwei Schneidringe aufweisen, die durch eine plastische Verformung sowohl eine Klemmung als auch eine Dichtung bereitstellen. Wenn die Schneidringverschraubung einmal betätigt wurde, ist der Schneidring in dichter Anlage an der Rohr- oder Schlauchleitung und unlösbar mit dieser verbunden.

Der Erfindung liegt die Aufgabe zugrunde, eine gattungsgemäße Vorrichtung bereitzustellen, die weiter verbesserte Gebrauchseigenschaften aufweist. Insbesondere soll die einfache Betätigung beibehalten werden, aber gleichzeitig die Betriebssicherheit der Verbindung weiter erhöht und auch unter rauen Einsatzbedingungen dauerhaft gewährleistet sein.

Das Problem ist durch die im Anspruch 1 bestimmte Vorrichtung gelöst. Besondere Ausführungsarten der Erfindung sind in den Unteransprüchen bestimmt.

In einer Ausführungsart ist die Aufgabe gelöst durch eine Vorrichtung zum Verbinden mit einer Rohr- oder Schlauchleitung, insbesondere durch eine Klemmringverschraubung, wobei die Vorrichtung einen Grundkörper, ein Betätigungselement und ein ringförmiges Klemmelement aufweist. Bei einer Relativbewegung des Betätigungselements gegenüber dem Grundkörper ist das Klemmelement derart verformbar ist, dass die Rohr- oder Schlauchleitung fest und dicht mit der Vorrichtung verbindbar ist. Das Klemmelement weist einen in axialer Richtung verlaufenden Schlitz auf. Beim Betätigen des Betätigungselements ist das Klemmelement aufgrund des Schlitzes in Umfangsrichtung federelastisch verformbar. Dabei ist die lichte Weite des Klemmelements federelastisch veränderbar. Durch die federelastische Verformbarkeit des Klemmelements wird eine lösbare Verbindung bereitgestellt, insbesondere löst sich das Klemmelement beim lösenden Betätigen des Betätigungselements vorzugsweise vollständig von der Rohr- oder Schlauchleitung, so dass diese von dem Grundkörper abgenommen werden kann. Dadurch ist eine Wiederverwendbarkeit der Vorrichtung ohne Austausch eines Klemm- oder Dichtelements möglich.

Der Schlitz ist vorzugsweise durchgehend, so dass mit vergleichsweise geringen axialen Kräften eine große Verformbarkeit des Klemmelements erreichbar ist. In einer Ausführungsart weist der Schlitz in Umfangsrichtung eine Erstreckung auf, die klein genug ist, dass in Abhängigkeit des Werkstoffes des Klemmelements bei einem den Schlitz schließenden Verformen keine wesentliche plastische Verformung des Klemmelements auftritt. Der Schlitz ist einerseits so groß gewählt, dass eine ausreichende Verformung und damit Klemmung der Rohr- oder Schlauchleitung gewährleistet ist, und andererseits so klein, dass beim Verformen ein Anschlag gebildet ist, der verhindert, dass das Klemmelement übermäßig verformt wird und dabei eine wesentliche plastische Verformung erfährt und/oder die Rohr- oder Schlauchleitung beschädigt wird. Der Schlitz erstreckt sich im unverformten Zustand des Klemmelements beispielsweise über einen Winkelbereich von mehr als 3 Grad und weniger als 20 Grad in Umfangsrichtung, insbesondere mehr als 4 Grad und weniger als 15 Grad und vorzugsweise mehr als 6 Grad und weniger als 10 Grad.

Die lichte Weite des Klemmelements ist im unverformten Zustand größer als der Außendurchmesser der zu verbindenden Rohr- oder Schlauchleitung. Dadurch kann das Klemmelement beim Montieren der Vorrichtung auf die Rohr- oder Schlauchleitung aufgeschoben werden und ist entlang der Rohr- oder Schlauchleitung axial verschiebbar. Die lichte Weite des Klemmelements ist im unverformten Zustand vorzugsweise auch größer als oder gleich groß wie die lichte Weite der Öffnung des Betätigungselements, durch welche die Rohr- oder Schlauchleitung hindurchführbar ist.

In einer Ausführungsart ist das Betätigungselement als Überwurfmutter ausgeführt, die auf den Grundkörper aufschraubbar ist. Alternativ hierzu kann auch eine andere Verbindungstechnik, wie beispielsweise ein Renk- oder Bajonettverschluss, zwischen dem Betätigungselement und dem Grundkörper vorgesehen sein. Je nach Betätigungsrichtung ist das Klemmelement in Eingriff mit der Leitung bringbar oder außer Eingriff mit der Leitung bringbar.

In einer Ausführungsart ist der Klemmring aus einem Metall hergestellt, beispielsweise aus einem Federstahl, oder aus einer Metalllegierung mit Federeigenschaften.

In einer Ausführungsart betrifft die Erfindung eine Vorrichtung zum Verbinden mit einer biegesteifen Rohrleitung, insbesondere zum Verbinden mit einem Rohr aus einem Metall, beispielsweise aus Aluminium oder Kupfer, oder aus Kunststoff. Für den Klemmring wird ein Werkstoff gewählt, der eine größere Härte aufweist als der Werkstoff der Rohrleitung. Dadurch ist es möglich, dass beim klemmenden Verbinden der Klemmring in die Rohrleitung einschneidet und dadurch eine formschlüssige Verbindung zwischen Klemmring und Rohr herstellt.

In einer Ausführungsart weist das Klemmelement auf seiner der Rohr- oder Schlauchleitung zugewandten Oberfläche mindestens ein Klemmmittel auf. Das Klemmmittel ist bei einem die lichte Weite des Klemmelements verkleinernden Betätigen des Betätigungselements in klemmende Anlage an die Rohr- oder Schlauchleitung bringbar. Das Klemmmittel kann abweichend von der Ringform des Klemmrings ausgebildet sein, beispielsweise kann das Klemmmittel auch durch über den Umfang vorzugsweise gleichverteilt angeordnete punkt- oder linienförmige Vorsprünge gebildet sein. Die Ausbildung des Klemmmittels kann an den Werkstoff der Rohr- oder Schlauchleitung angepasst sein, wobei es vorteilhaft ist, wenn das Klemmmittel austauschbar in der Vorrichtung angeordnet ist. Bei gleichbleibendem Grundkörper und Betätigungselement sind unterschiedliche Klemmelemente für die Verbindung mit unterschiedlichen Rohr- oder Schlauchleitungen einsetzbar.

In einer Ausführungsart erstreckt sich das Klemmmittel über mindestens einen Abschnitt des Innenumfangs des Klemmelements, vorzugsweise über den gesamten Innenumfang des Klemmelements. Das Klemmmittel kann durch einen umlaufenden Klemmsteg gebildet sein, der an seiner der Rohr- oder Schlauchleitung zugewandten Seite eine Kante ausbilden kann, mit der eine formschlüssige Anlage des Klemmmittels an der Rohr- oder Schlauchleitung erreichbar ist. Die Kante kann durch eine im Querschnitt dreieckförmige Kontur des Klemmsteges gebildet sein. Die beiden die Kante bildenden Flächen können dabei einen Winkel zwischen 10 Grad und 170 Grad einschließen, insbesondere zwischen 20 Grad und 120 Grad und vorzugsweise zwischen 30 Grad und 90 Grad. Der Querschnitt durch den die Kante bildenden Klemmsteg kann dabei durch zwei gleich lange Schenkel gebildet sein, oder der Querschnitt kann sägezahnförmig sein, so dass beispielsweise bei einer Zugbelastung auf die Rohr- oder Schlauchleitung eine hohe Klemmkraft erreichbar ist.

In einer Ausführungsart weist das Klemmelement mindestens eine Schrägfläche auf, die beim Betätigen des Betätigungselements in Anlage an das Betätigungselement und/oder an den Grundkörper bringbar ist. Durch die Schrägfläche ist eine Axialbewegung des Betätigungselements in eine die lichte Weite des Klemmelements verändernde elastische Verformung umlenkbar. Das Klemmelement kann auf einander gegenüberliegenden Seiten, insbesondere auf in Axialrichtung einander gegenüberliegenden Seiten, jeweils eine Schrägfläche aufweisen. Die Schrägfläche kann mit einer Längsachse der Vorrichtung einen Winkel von mehr 45 Grad einschließen, insbesondere mehr als 60 Grad.

In einer Ausführungsart ist das Klemmelement im Querschnitt trapezförmig. Die längere der beiden Parallelseiten des Trapezes kann der Rohr- oder Schlauchleitung zugewandt sein. Das Klemmmittel kann auf der längeren der Parallelseiten angeordnet sein. In einer Ausführungsart ist das Klemmmittel axial mittig angeordnet.

Das Klemmelement kann mehrere Klemmmittel aufweisen, insbesondere mehrere Klemmstege, die vorzugsweise jeweils umlaufend sind und/oder in Axialrichtung hintereinander an dem Klemmelement angeordnet sind.

In einer Ausführungsart sind die beiden nicht parallelen Seiten des Trapezes gleich lang, d.h. das Klemmelement weist im Querschnitt die Form eines gleichschenkligen oder symmetrischen Trapezes auf. Dadurch ergeben sich gleiche Winkel der Schrägflächen. Vorzugsweise ist das Klemmelement in Bezug auf eine Mittelebene symmetrisch ausgebildet, so dass das Klemmelement in beiden Ausrichtungen in die Vorrichtung einsetzbar ist bzw. auf die Rohr- oder Schlauchverbindung aufschiebbar ist.

In einer Ausführungsart weist die Vorrichtung außerdem ein Dichtelement auf, das beim Betätigen des Betätigungselements die Verbindung der Vorrichtung mit der Rohr- oder Schlauchleitung dichtet. Das Dichtelement kommt beim Verbinden in dichtende Anlage an die Rohr- oder Schlauchleitung. In einer Ausführungsart ist das Dichtelement durch einen Dichtring, beispielsweise einem O-Ring gebildet. Im unverformten Zustand ist die lichte Weite des Dichtelements größer als der Außendurchmesser der anzuschließenden Rohr- oder Schlauchleitung. Im unverformten Zustand ist die lichte Weite des Dichtelements größer als der Durchmesser der die Rohr- oder Schlauchleitung aufnehmenden Öffnung im Grundkörper und/oder im Betätigungselement.

In einer Ausführungsart ist zwischen dem Klemmelement und dem Dichtelement ein Druckelement angeordnet, das beim Betätigen des Betätigungselements die in Axialrichtung wirkenden Kräfte zwischen dem Klemmelement und dem Dichtelement überträgt. Das Druckelement weist vorzugsweise mindestens eine Schrägfläche auf, mittels der die axiale Bewegung in eine radiale Bewegung des Klemmelements und/oder des Dichtelements übertragbar ist. Das Druckelement kann unverlierbar am Grundkörper angeordnet sein. Hierzu können das Druckelement und/oder der Grundkörper zusammenwirkende Rastmittel aufweisen.

Beim Betätigen des Betätigungselements verformt das Druckelement zunächst das Dichtelement bis zur dichten Verbindung zwischen der Vorrichtung und der Rohr- oder Schlauchleitung. Beim weiteren Betätigen des Betätigungselements verformt das Druckelement das Klemmelement bis zur lösbar klemmenden Verbindung zwischen der Vorrichtung und der Rohr- oder Schlauchleitung. Mittels der Vorrichtung ist daher die Rohr- oder Schlauchleitung zunächst dichtend mit der Vorrichtung verbindbar und anschließend in der dichten Position an der Vorrichtung klemmbar.

Das Klemmelement ist aus einem Werkstoff hergestellt, der eine höhere Härte aufweist als der Werkstoff des Dichtelements. Darüber hinaus kann der Grundkörper eine Anschlagfläche für das Druckelement aufweisen, und solange das Druckelement noch nicht in Anlage an dieser Anschlagfläche ist, verschiebt sich das Druckelement in Bezug auf den Grundkörper und übt dadurch eine das Dichtelement verformende Kraft aus. Sobald das Druckelement in Anlage an der Anschlagfläche des Grundkörpers ist, erfolgt keine weitere Kraftausübung auf das Dichtelement. Bei einem weiteren Betätigen erfolgt vielmehr eine Kraftausübung auf das Klemmelement, wodurch dieses in klemmende Anlage an die Rohr- oder Schlauchleitung bringbar ist. Das Dichtelement kann zwischen Grundkörper und Druckelement angeordnet sein. Das Klemmelement kann zwischen Druckelement und Betätigungselement angeordnet sein.

Weitere Vorteile, Merkmale und Einzelheiten der Erfindung ergeben sich aus den Unteransprüchen sowie der nachfolgenden Beschreibung, in der unter Bezugnahme auf die Zeichnung mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine perspektivische Ansicht eines ersten Ausführungsbeispiels einer erfindungsgemäßen Vorrichtung,
- Fig. 2: zeigt einen Schnitt durch das erste Ausführungsbeispiel der Fig. 1,
- Fig. 3: zeigt eine perspektivische Ansicht eines zweiten Ausführungsbeispiels einer erfindungsgemäßen Vorrichtung,
- Fig. 4: zeigt einen Schnitt durch die Vorrichtung der Fig. 3 im noch nicht verbundenen Zustand, und
- Fig. 5: zeigt einen Schnitt durch die Vorrichtung der Fig. 3 im verbundenen Zustand.

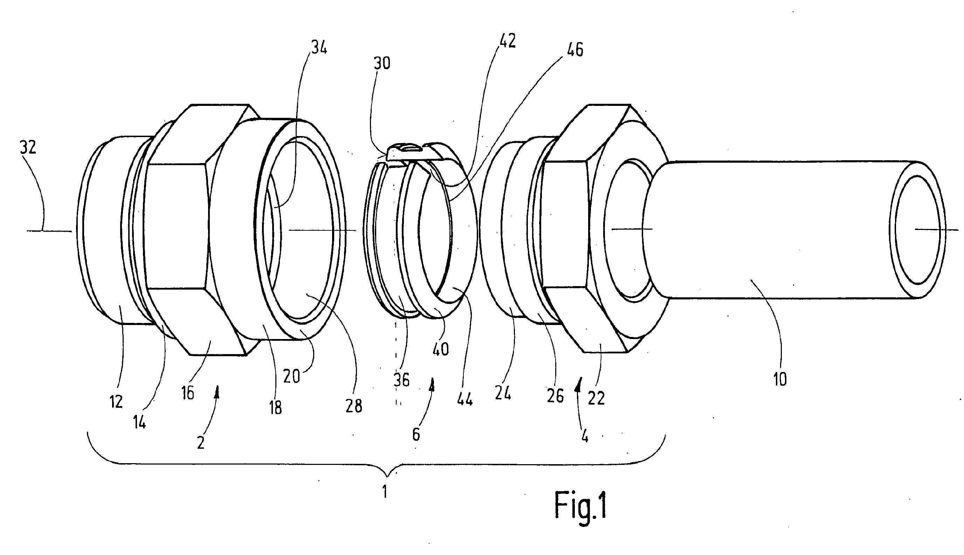

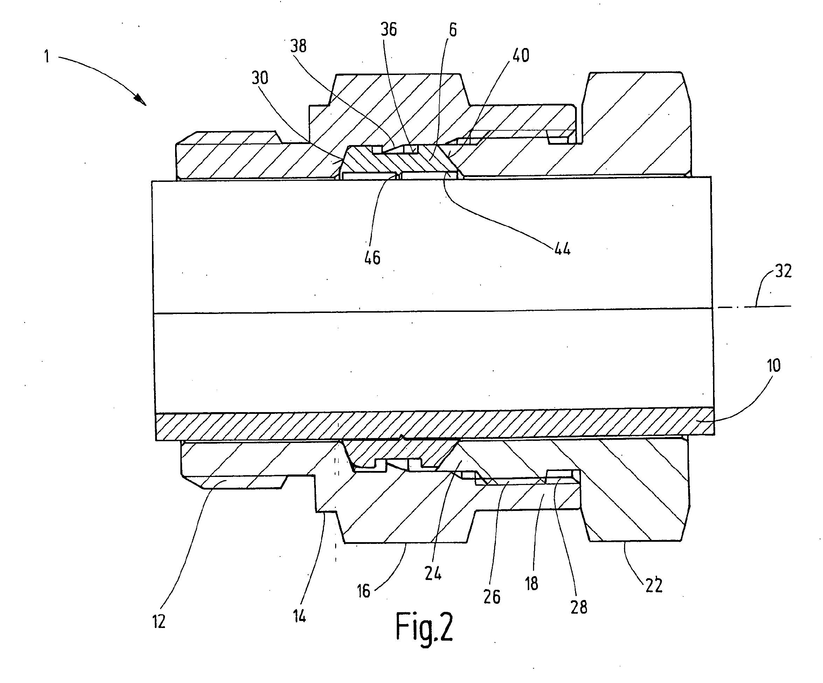

Die Fig. 1 zeigt eine perspektivische Ansicht eines ersten Ausführungsbeispiels einer erfindungsgemäßen Vorrichtung 1 im auseinandergebauten Zustand. Die Fig. 2 zeigt einen Schnitt durch das erste Ausführungsbeispiel der Fig. 1, wobei in der oberen Bildhälfte der Fig. 2 der noch nicht verbundene Zustand der Vorrichtung 1 dargestellt ist und in der unteren Bildhälfte der Fig. 2 der verbundene Zustand.

Die Vorrichtung 1 ist mit einer Rohr- oder Schlauchleitung 10 verbindbar. Die Vorrichtung 1 weist einen Grundkörper 2, ein Betätigungselement 4 und ein ringförmiges Klemmelement 6 auf. Bei einer Relativbewegung des Betätigungselements 4 gegenüber dem Grundkörper 2 wird das Klemmelement 6 derart verformt, dass die Rohr- oder Schlauchleitung 10 mit der Vorrichtung 1 lösbar klemmend verbindbar ist.

Der Grundkörper 2 weist eine Durchgangsöffnung auf für die Aufnahme der Rohr- oder Schlauchleitung 10. An seinem dem Betätigungselement 4 zugewandten Ende ist die Öffnung im Durchmesser vergrößert, so dass darin das Klemmelement 6 aufgenommen werden kann. An seinem dem Betätigungselement 4 abgewandten Ende weist der Grundkörper 2 auf seiner Außenumfangsfläche ein Außengewinde 12 auf, mit dem die Vorrichtung 1 beispielsweise mit einer Schottwand verschraubbar ist. In Richtung auf das Betätigungselement 4 daran anschließend weist der Grundkörper 2 unter Ausbildung eines Absatzes 14 eine Werkzeugangriffsfläche 16 auf. Weiter anschließend weist der Grundkörper 2 einen hülsenförmigen Endabschnitt 18 auf. An seinem dem Betätigungselement 4 zugewandten Ende bildet der Grundkörper 2 eine stirnseitige Anlagefläche 20 auf für das Betätigungselement 4.

Das Betätigungselement 4 weist eine Durchgangsbohrung für die Rohr- oder Schlauchleitung 10 auf. Die lichte Weite der Durchgangsbohrung des Betätigungselements 4 stimmt im Wesentlichen überein mit der lichten Weite der Öffnung im Grundkörper 2 und ist insbesondere etwas größer als der Außendurchmesser der Rohr- oder Schlauchleitung 10. Das Betätigungselement 4 weist im Bereich einer vorzugsweise endseitigen flanschartigen Verbreiterung eine Werkzeugsangriffsfläche 22 auf.
Daran schließt sich in Richtung auf den Grundkörper 2 ein hülsenförmiger Abschnitt 24 an, der an einem vom axialen Ende zurückversetzten Abschnitt ein Außengewinde 26 aufweist, mittels dem das Betätigungselement 4 mit dem Grundkörper 2 verschraubbar ist.
Hierzu weist der Grundkörper 2 im Bereich seines Endabschnitts 18 auf der Innenseite ein Innengewinde 28 auf.

Ausgehend von dem in der Fig. 1 dargestellten Zustand wird zunächst das Klemmelement 6 in dem Grundkörper 2 vormontiert, insbesondere eingeclipst, bis das Klemmelement 6 in die in der oberen Bildhälfte der Fig. 2 dargestellte Position zu liegen kommt. Anschließend wird das Betätigungselement 4 auf die Rohr- oder Schlauchleitung 10 aufgeschoben. Daraufhin wird die Rohr- oder Schlauchleitung 10 in die Durchgangsöffnung des Grundkörpers 2 geschoben. Das Klemmelement 6 ist im wesentlichen ringförmig ausgebildet und weist auf seiner dem Grundkörper 2 zugewandten Endseite eine erste Schrägfläche 30 auf, die mit einer Längsachse 32 der Vorrichtung 1 einen spitzen Winkel einschließt, insbesondere einen Winkel von mehr als 30 Grad und weniger als 85 Grad, vorzugsweise von mehr als 60 Grad und weniger als 80 Grad. Der Grundkörper 2 weist eine zweite Schrägfläche 34 (Fig. 1) auf, an welche das Klemmelement 6 in Anlage bringbar ist; die Neigung der zweiten Schrägfläche 34 stimmt dabei im Wesentlichen mit der Neigung der ersten Schrägfläche 30 überein.

An seinem dem Betätigungselement 4 zugewandten Ende weist das Klemmelement 6 eine dritte Schrägfläche 40 auf, die mit der Längsachse 32 einen spitzen Winkel einschließt, insbesondere einen Winkel von mehr als 30 Grad und weniger als 80 Grad, vorzugsweise von mehr als 40 Grad und weniger als 60 Grad. Der hülsenförmige Abschnitt 24 des Betätigungselements 4 weist an seinem dem Klemmelement 6 zugewandten axialen Ende eine Schrägfläche mit im Wesentlichen übereinstimmendem Winkel zur Längsachse 32 auf.

Bei der Vormontage des Klemmmittels 6 an dem Grundkörper 2 kommt es zu einem Verrasten von an dem Klemmmittel 6 einerseits und dem Grundkörper 2 andererseits angeordneten Rastmitteln, die im Ausführungsbeispiel durch eine ringförmige Nut 36 im Klemmelement 6 und einen auf der Innenseite im Grundkörper 2 verlaufenden Raststeg 38 gebildet sind. Nach dem Einrasten ist das Klemmelement 6 unverlierbar, aber insbesondere axial beweglich, an dem Grundkörper 2 festgelegt. In der oberen Bildhälfte der Fig. 2 ist das Klemmelement 6 in Anlage an dem Grundkörper 2 und dem Betätigungselement 4, befindet sich aber noch in seinem im Wesentlichen unverformtem Zustand.

Das Klemmelement 6 weist einen in axialer Richtung verlaufenden Schlitz 42 auf, durch den das Klemmelement 6 in Umfangsrichtung elastisch verformbar ist. Beim Betätigen des Betätigungselements 4 reduziert sich durch die axiale Relativbewegung und die Schrägflächen 30, 34, 40 die lichte Weite des Klemmelements 6, so dass das Klemmelement 6 mit seiner im Ausführungsbeispiel im wesentlichen zylindrischen Innenfläche 44 in Anlage an den Außenumfang der Rohr- oder Schlauchleitung 10 kommt.

Das Klemmelement 6 weist in dem in der Fig. 2 dargestellten Querschnitt die Form eines Trapezes auf, insbesondere eines Trapezes mit unterschiedlicher Schenkellänge. In Axialrichtung mittig ist ein Klemmmittel 46 angeordnet, insbesondere vorzugsweise einstückig von dem Klemmelement 6 ausgebildet. Im Ausführungsbeispiel ist das Klemmmittel 46 durch einen umlaufenden Klemmsteg gebildet, der in Richtung auf die Rohr- oder Schlauchleitung 10 eine Klemmkante ausbildet, die in dem in der Fig. 2 dargestellten Querschnitt spitzwinklig ist, insbesondere einen Winkel von weniger als 80 Grad einschließt. Mit diesem Klemmmittel 46 greift das Klemmelement 6 formschlüssig in die Rohr- oder Schlauchleitung 10 ein und fixiert dadurch die Rohr- oder Schlauchleitung 10 in Bezug auf die Vorrichtung 1. Bei einem lösenden Betätigen des Betätigungselements 4 wird aufgrund der Federkraft des Klemmelements 6 das Klemmmittel 46 wieder außer Eingriff mit der Rohr- oder Schlauchleitung 10 gebracht und diese wird frei gegeben und kann aus der Vorrichtung 1 entnommen werden.

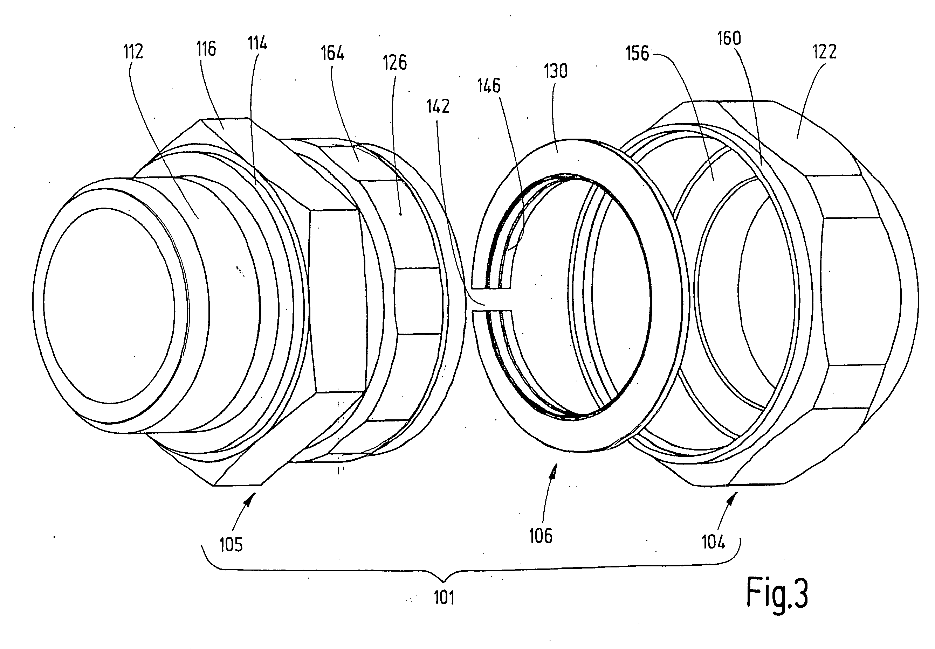

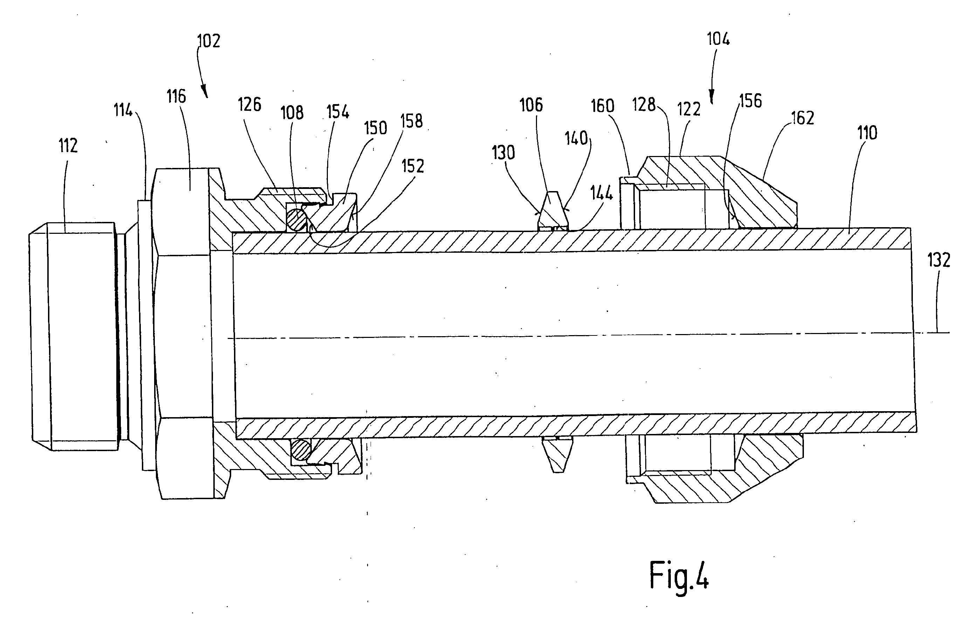

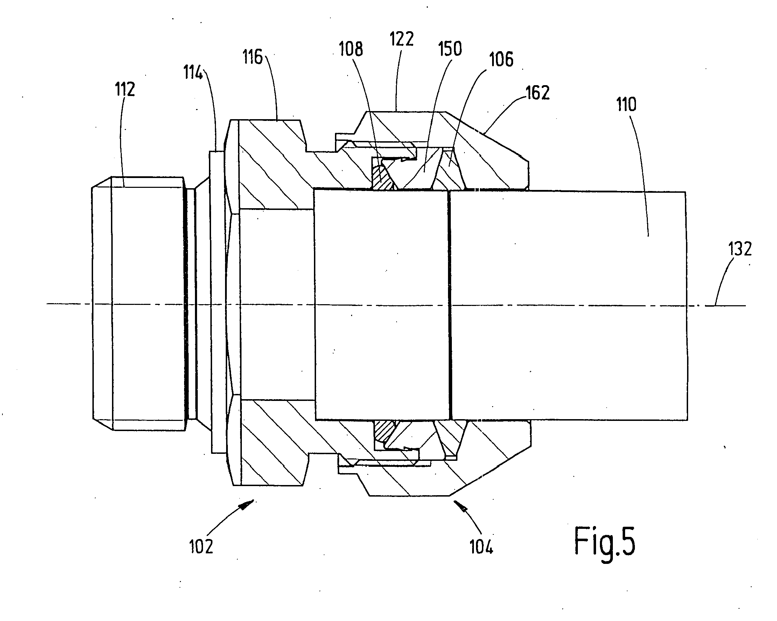

Die Fig. 3 zeigt eine perspektivische Ansicht eines zweiten Ausführungsbeispiels einer erfindungsgemäßen Vorrichtung 101. Die Fig. 4 zeigt einen Schnitt durch die Vorrichtung 101 der Fig. 3 im noch nicht verbundenen Zustand. Die Fig. 5 zeigt einen Schnitt durch die Vorrichtung 101 im verbundenen Zustand.

Die Vorrichtung 101 weist einen Grundkörper 102, ein Betätigungselement 104 und ein Klemmelement 106 auf. Darüber hinaus weist die Vorrichtung 101 ein nur in den Fig. 4 und 5 sichtbares Dichtelement 108 auf, das im Ausführungsbeispiel durch einen O-Ring gebildet ist. Die Vorrichtung 101 weist ein Druckelement 150 auf, das beim Betätigen des Betätigungselements 104 die in Axialrichtung wirkenden Kräfte zwischen dem Klemmelement 106 und dem Dichtelement 108 überträgt.

Der Grundkörper 102 weist an seinem dem Betätigungselement 104 abgewandten Ende einen hülsenförmigen Endabschnitt mit einem Außengewinde 112 auf. Unter Ausbildung eines Absatzes 114 weist der Grundkörper 102 im mittleren Bereich einen verbreiterten Abschnitt auf, der eine Werkzeugangriffsfläche 116 ausbildet, insbesondere einen Sechskant. Das Betätigungselement 104 weist ebenfalls eine Werkzeugangriffsfläche 122 auf, an die sich in Richtung auf den Grundkörper 102 ein stutzenförmiger Abschnitt 160 mit gegenüber der Werkzeugangriffsfläche 122 reduziertem Außendurchmesser anschließt. An seinem dem Grundkörper 102 gegenüberliegenden Ende weist das Betätigungselement 104 einen kegelförmigen Außenabschnitt 162 auf, der mit der Längsachse 132 einen spitzen Winkel einschließt, insbesondere einen Winkel von mehr als 20 Grad und weniger als 75 Grad, vorzugsweise von mehr als 30 Grad und weniger als 60 Grad.

Wie sich aus der Darstellung der Fig. 4 ergibt, ist das Druckelement 150 mindestens abschnittsweise hülsenförmig ausgebildet mit einer lichten Weite, die größer ist als der Außendurchmesser der anzuschließenden Rohr- oder Schlauchleitung 110 und der lichten Weite der Aufnahmeöffnung im Grundkörper 102 entspricht. Das Druckelement 150 ist mit dem Grundkörper 102 verbindbar. Hierzu kann das Druckelement 150 und der Grundkörper 102 miteinander korrespondierende Rastmittel aufweisen, die im Ausführungsbeispiel der Fig. 4 einen radial außen liegenden und im Querschnitt sägezahnförmigen Vorsprung des Druckelements 150 umfassen, der mit einem von dem Grundkörper 102 nach radial innen vorstehenden Rasthaken zusammenwirkt. In der eingerasteten Position ist das Druckelement 150 unverlierbar mit dem Grundkörper 102 verbunden, aber diesem gegenüber axial beweglich.

An seinem dem Dichtelement 108 zugewandten Ende weist das Druckelement 150 eine vierte Schrägfläche 152 auf, die mit der Längsachse 132 der Vorrichtung 101 einen spitzen Winkel einschließt, insbesondere einen Winkel von mehr als 20 Grad und weniger als 80 Grad und vorzugsweise mehr als 45 Grad und weniger als 65 Grad. Bei einem axialen Verschieben des Druckelements 150 entlang der Längsachse 132 wird über die vierte Schrägfläche 152 das Dichtelement 108 in Anlage an die Rohr- oder Schlauchleitung 110 gebracht und damit eine dichte Verbindung zwischen dem Grundkörper 102 und der Rohr- oder Schlauchleitung 110 hergestellt.

Die axiale Bewegung des Druckelements 150 erfährt einen Anschlag durch die von dem Druckelement 150 durch eine flanschartige Verbreiterung gebildete und vorzugsweise radial ausgerichtete Anschlagfläche 154, die in Anlage an eine stirnseitige Endfläche des Grundkörpers 102 kommt; dieser Zustand ist in der Fig. 5 dargestellt. Die axiale Verschiebung des Druckelements 150 erfolgt dabei durch ein Aufschrauben des Betätigungselements 104 mit dem Innengewinde 128 auf das Außengewinde 126 des Grundkörpers 102. Das Außengewinde 126 ist nicht durchgehend, sondern in Umfangsrichtung nur abschnittsweise aufgebracht und wird vorzugsweise regelmäßig von planen Abschnitten 164 unterbrochen. Die Erstreckung der planen Abschnitte 164 in Umfangsrichtung ist dabei geringer als die Erstreckung der Abschnitte mit dem Außengewinde 126. Die planen Abschnitte 164 resultieren aus der Verwendung eines Sechskant-Ausgangsmaterials mit optimierten Außenabmessungen, die ein sicheres Verschrauben mit dem Betätigungselement 104 gewährleisten und gleichzeitig den Materialabfall beim Herstellen des Außengewindes 126 minimieren.

Dabei kommt das Klemmelement 106, dessen Querschnittsform ein symmetrisches Trapez ist, mit der dritten Schrägfläche 140, die mit der Längsachse 132 der Vorrichtung 101 einen spitzen Winkel einschließt, insbesondere einen Winkel von mehr als 45 Grad und weniger als 85 Grad, vorzugsweise von mehr als 60 Grad und weniger als 80 Grad, in Anlage an eine von dem Betätigungselement 104 am Übergang von dem das Innengewinde 128 tragenden Abschnitt zu dem die Rohr- oder Schlauchleitung 110 aufnehmenden Abschnitt ausgebildete fünfte Schrägfläche 156.

Mit seiner gegenüberliegenden ersten Schrägfläche 130 kommt das Klemmelement 106 in Anlage an eine von dem Druckelement 150 ausgebildete sechste Schrägfläche 158 und schiebt diese in Richtung auf das Dichtelement 108. Nachdem die Anschlagfläche 154 des Druckelements 150 in Anlage an dem Grundkörper 102 ist, wird bei einem weiteren Betätigen des Betätigungselements 104 das Klemmelement 106, das in Umfangsrichtung einem Schlitz 142 (Fig. 3) aufweist, federelastisch verformt, wodurch sich die lichte Weite des Klemmelements 106 reduziert.

Das Klemmelement 106 ist mit seiner vorzugsweise zylindrischen Innenfläche 144 in Anlage an die Rohr- oder Schlauchleitung 110 bringbar, wobei das vorzugsweise axial mittig angeordnete, in Umfangsrichtung umlaufende und eine Klemmkante ausbildende Klemmmittel 146 (Fig. 3) in klemmende Anlage an den Außenumfang der Rohr- oder Schlauchleitung 110 kommt. Dadurch wird die Rohr- oder Schlauchleitung 110 axial in Bezug auf die Vorrichtung 101 fixiert, wobei gleichzeitig die dichte Verbindung aufgrund der Anlage des Dichtelements 108 gewährleistet ist. Die Breite des Schlitzes 142 ist dabei so gewählt, insbesondere so groß gewählt, dass die Innenfläche 144 in klemmende Anlage an die Rohr- oder Schlauchleitung 110 bringbar ist. Andererseits ist die Breite des Schlitzes 142 derart begrenzt, und beträgt im Ausführungsbeispiel beispielsweise zwischen 8 und 10 Grad, dass durch das Aneinanderstoßen der stirnseitigen Endflächen des Klemmelements 142 ein Anschlag und damit eine Begrenzung für das Verformen des Klemmelements 142 gegeben ist, durch die eine Überbeanspruchung der Rohr- oder Schlauchleitung 110 und vorallem des Klemmelements 142 verhindert ist, insbesondere eine Beschädigung der Rohr- oder Schlauchleitung 110 und/oder eine wesentliche plastische Verformung des Klemmelements 142 um beispielsweise mehr als 0,5 % oder mehr als 0,2 %.

Bei einem lösenden Betätigen des Betätigungselements 104 geht das Klemmelement 106 aufgrund seiner federelastischen Eigenschaften selbsttätig außer Eingriff von der Rohr- oder Schlauchleitung 110 und gibt diese frei, so dass die Rohr- oder Schlauchleitung 110 aus der Vorrichtung 101 entnommen werden kann.

## Patentansprüche

1. Vorrichtung (1; 101) zum Verbinden mit einer Rohr- oder Schlauchleitung (10), insbesondere Klemmringverschraubung, wobei die Vorrichtung (1; 101) einen Grundkörper (2), ein Betätigungselement (4) und ein ringförmiges Klemmelement (6) aufweist, und wobei bei einer Relativbewegung des Betätigungselements (4) gegenüber dem Grundkörper (2) das Klemmelement (6) derart verformbar ist, dass die Rohr- oder Schlauchleitung (10) mit der Vorrichtung (1; 101) verbindbar ist, **dadurch gekennzeichnet, dass** das Klemmelement (6) einen in axialer Richtung verlaufenden Schlitz (42) aufweist, und dass beim Betätigen des Betätigungselements (4) das Klemmelement (6) aufgrund des Schlitzes (42) in Umfangsrichtung federelastisch verformbar ist und dabei die lichte Weite des Klemmelements (6) federelastisch veränderbar ist.

2. Vorrichtung (1; 101) nach Anspruch 1, **dadurch gekennzeichnet, dass** der Schlitz (42) in Umfangsrichtung eine Erstreckung aufweist, die klein genug gewählt ist, damit in Abhängigkeit des Werkstoffes des Klemmelements (6) bei einem den Schlitz (42) schließenden Verformen keine wesentliche plastische Verformung des Klemmelements (6) auftritt.

3. Vorrichtung (1; 101) nach Anspruch 1 oder 2, **dadurch gekennzeichnet, dass** das Klemmelement (6) auf seiner der Rohr- oder Schlauchleitung (10) zugewandten Oberfläche mindestens ein Klemmmittel (46) aufweist, dass bei einem die lichte Weite des Klemmelements (6) verkleinernden Betätigen des Betätigungselements (4) in klemmende Anlage an die Rohr- oder Schlauchleitung (10) bringbar ist.

4. Vorrichtung (1; 101) nach Anspruch 3, **dadurch gekennzeichnet, dass** das Klemmmittel (46) in formschlüssige Anlage an die Rohr- oder Schlauchleitung (10) bringbar ist.

5. Vorrichtung (1; 101) nach Anspruch 3 oder 4, **dadurch gekennzeichnet, dass** das Klemmmittel (46) sich über mindestens einen Abschnitt des Innenumfangs des Klemmelements (6) erstreckt, vorzugsweise über den gesamten Innenumfang des Klemmelements (6).

6. Vorrichtung (1; 101) nach Anspruch 1 oder einem der vorgenannten Ansprüche, **dadurch gekennzeichnet, dass** das Klemmelement (6) mindestens eine Schrägfläche (30, 40) aufweist, die beim Betätigen des Betätigungselements in Anlage an dem Betätigungselement (4) und/oder dem Grundkörper (2) ist und durch die eine Axialbewegung des Betätigungselements (4) in eine die lichte Weite des Klemmelements (6) verändernde elastische Verformung umlenkbar ist.

7. Vorrichtung (1; 101) nach Anspruch 1 oder einem der vorgenannten Ansprüche, **dadurch gekennzeichnet, dass** das Klemmelement (6) im Querschnitt trapezförmig ist, insbesondere die Form eines gleichschenkligen Trapezes aufweist, und dass die längere der beiden Parallelseiten des Trapezes der Rohr- oder Schlauchleitung (10) zugewandt ist.

8. Vorrichtung (1; 101) nach Anspruch 1 oder einem der vorgenannten Ansprüche, **dadurch gekennzeichnet, dass** die Vorrichtung (1; 101) außerdem ein Dichtelement (8; 108) aufweist, das beim Betätigen des Betätigungselements (4; 104) die Verbindung der Vorrichtung (1; 101) mit der Rohr- oder Schlauchleitung (10; 110) dichtet.

9. Vorrichtung (1; 101) nach Anspruch 8, **dadurch gekennzeichnet, dass** zwischen dem Klemmelement (106) und dem Dichtelement (108) ein Druckelement (150) angeordnet ist, das beim Betätigen des Betätigungselements (104) die in Axialrichtung wirkenden Kräfte zwischen dem Klemmelement (106) und dem Dichtelement (108) überträgt.

10. Vorrichtung (1; 101) nach Anspruch 9, **dadurch gekennzeichnet, dass** das Druckelement (150) unverlierbar am Grundkörper (102) angeordnet ist.

11. Vorrichtung (1; 101) nach Anspruch 10, **dadurch gekennzeichnet, dass** das Druckelement (150) im unverlierbar mit dem Grundkörper (102) verbundenen Zustand axial beweglich ist.

12. Vorrichtung (1; 101) nach einem der Ansprüche 8 bis 11, **dadurch gekennzeichnet, dass** beim Betätigen des Betätigungselements (104) das Druckelement (150) zunächst das Dichtelement (108) bis zur dichten Verbindung zwischen Vorrichtung (1; 101) und Rohr- oder Schlauchleitung (110) verformt, und anschließend beim weiteren Betätigen das Druckelement (150) das Klemmelement (150) bis zur lösbar klemmenden Verbindung zwischen der Vorrichtung (1; 101) und der Rohr- oder Schlauchleitung (110) verformt.

13. Vorrichtung (1; 101) nach Anspruch 1 oder einem der vorgenannten Ansprüche, **dadurch gekennzeichnet, dass** das Klemmelement (6) unverlierbar am Grundkörper (2) festgelegt ist.

14. Vorrichtung (1; 101) nach Anspruch 13, **dadurch gekennzeichnet, dass** das Klemmelement (6) im unverlierbar am Grundkörper (2) festgelegten Zustand axial beweglich ist.
